# EUROPÄISCHE PATENTSCHRIFT

(11) **EP 4 056 344 B1**
(45) Veröffentlichungstag und Bekanntmachung des Hinweises auf die Patenterteilung: **26.02.2025**
(21) Anmeldenummer: 22020098.4
(22) Anmeldetag: 08.03.2022
(51) Int. Cl.: B29C 33/38, B29C 33/40, B29C 33/44, B29C 33/50, B29C 39/34, B29C 44/58, B29C 45/44

(54) **VERFAHREN ZUR HERSTELLUNG EINES ELASTISCH VERFORMBAREN FORMTEILS**
METHOD FOR THE PRODUCTION OF AN ELASTICALLY DEFORMABLE MOULDED PART
PROCÉDÉ DE FABRICATION D'UNE PIÈCE MOULÉE ÉLASTIQUEMENT DÉFORMABLE

(30) Priorität: 10.03.2021 DE 102021105844
(43) Veröffentlichungstag der Anmeldung: 14.09.2022
(73) Patentinhaber: FIT AG, 92331 Lupburg (DE)
(72) Erfinder: Fruth, Carl, DE-92331 Lupburg (DE); Bonke, Alexander, DE-92331 Parsberg (DE)
(74) Vertreter: Schneider, Andreas

(56) Entgegenhaltungen:
- DE-A1- 102006 004 816
- DE-A1- 102007 007 154

## Beschreibung

Die Erfindung betrifft ein Verfahren zur Herstellung eines elastisch verformbaren, eine Anzahl hinterschnittiger Formteilbereiche aufweisenden Formteils mittels einer Form.

Zur kostengünstigen Herstellung identischer Formteile in großer Stückzahl wird oft ein Spritzgießverfahren eingesetzt. Beim Spritzgießen wird das Spritzgußmaterial verflüssigt und unter Druck in eine Spritzgußform eingespritzt. Anschließend kühlt das Material in der Spritzgußform ab. Das entstandene Formteil kann anschließend aus der Spritzgußform entnommen werden. Der Hohlraum der Form bestimmt dabei die Gestaltung des Formteils.

Aufgrund der steigenden Kundennachfrage nach individuell konfigurierten Produkten, die exakt auf die eigenen Wünsche zugeschnitten sind, spielen Einzel- bzw. Sonderanfertigungen in der Produktion eine immer größere Rolle.

Es ist bis heute noch kein Verfahren bekannt, mit dessen Hilfe eine kostengünstige Herstellung von Bauteilen in geringer Stückzahl, insbesondere als Einzelanfertigung (Losgröße 1), möglich ist. Die Produktionskosten für Spritzgußbauteile, die mittels individuell angefertigter, lediglich einmal verwendbarer Formen (Einmalformen) hergestellt sind, sind sehr hoch. Der Einsatz der Spritzgießtechnik ist daher in solchen Fällen in der Regel unwirtschaftlich. Es wird dann auf alternative Herstellungsverfahren ausgewichen, so daß die speziellen Vorteile des Spritzgießens, insbesondere die erzielbare hohe Präzision, nicht zum Tragen kommen.

Als alternative Herstellungsverfahren dienen Schichtbauverfahren. Bei derartigen additiven Fertigungsverfahren werden Schichten eines Aufbaumaterials sukzessive übereinander aufgetragen. Vor dem Auftragen der jeweils nächsten Schichten werden die dem Querschnitt des zu fertigenden Bauteils entsprechenden Stellen in den jeweiligen Schichten selektiv verfestigt. Ein Vorteil der additiven Fertigung ist es, daß Bauteile mit sehr komplexen Geometrien problemlos aufgebaut werden können. Dies betrifft insbesondere Bauteile mit stark hinterschnittigen Bereichen, bei denen eine Entformung des Hinterschnitts aus einer festen formgebenden Kontur nicht ohne die Zerstörung des Formteils möglich wäre.

Von Nachteil bei dem Einsatz additiver Fertigungstechniken ist es aber regelmäßig, daß besonders weiche Materialien nicht verarbeitet werden können, da technisch bedingt bei der additiven Fertigung immer zunächst eine ausreichende Verfestigung einer Materialschicht erfolgen muß, bevor darauf eine neue Materialschicht aufgebaut wird. Daher ist die Verarbeitung von verschiedenen Kunststoffen, wie Elastomeren, Polyurethanschäumen, Silikon und dergleichen, nicht oder nur mit Einschränkungen möglich, so daß insbesondere solche Formteile, die elastisch verformbar sein sollen, oft nicht oder nur mit einem sehr hohen Aufwand mittels additiver Fertigung herstellbar sind.

In DE 10 2007 007154 A1 ist ein Verfahren zur Herstellung eines Schaumteils beschrieben, das eine schaumfreie Hinterschneidung aufweist. Dabei wird für den Bereich der Hinterschneidung eine elastisch verformbare Form verwendet. Zum Entformen des Schaumteils wird die Form elastisch verformt. Dabei bleibt die Form unbeschädigt und kann für die Herstellung ein und desselben Schaumteils mehrfach hintereinander verwendet werden.

Eine Aufgabe der vorliegenden Erfindung ist es, eine Technik bereitzustellen, die es ermöglicht, individuelle Formteile, die elastisch verformbar sind und hinterschnittige Bereiche aufweisen, aus sehr weichen Materialien hochpräzise und kostengünstig herzustellen.

Diese Aufgabe wird durch ein Verfahren nach Anspruch 1 gelöst. Vorteilhafte Ausführungen der Erfindung sind in den Unteransprüchen angegeben. Die im Folgenden im Zusammenhang mit dem erfindungsgemäßen Verfahren erläuterten Vorteile und Ausgestaltungen gelten sinngemäß auch für eine zur Ausführung des Verfahrens dienende Vorrichtung (kein Teil der beanspruchten Erfindung) und umgekehrt.

Das erfindungsgemäße Verfahren zur Herstellung eines elastisch verformbaren, eine Anzahl hinterschnittiger Formteilbereiche aufweisenden Formteils mittels einer Form zeichnet sich dadurch aus, daß Formteilmaterial in die Form eingebracht wird, wobei die Form eine formgebende Kontur mit einer Anzahl Sonderkonturbereiche aufweist, die zur Formgebung der Anzahl hinterschnittiger Formteilbereiche des Formteils ausgebildet sind. Das Formteilmaterial weist dabei eine höhere Bruchdehnung auf als das Formmaterial, aus dem die Form zumindest im Bereich der Sonderkonturbereiche der formgebenden Kontur besteht. Das Formteil wird aus der Form entformt, indem die Form zusammen mit dem darin enthaltenen Formteil zumindest teilweise deformiert wird derart, daß sich das Formteil elastisch verformt und die Form zumindest teilweise, jedenfalls aber im Umfang der Sonderkonturbereiche, zerbricht.

Mit der Erfindung wird vorgeschlagen, ein elastisches Formteil, insbesondere aus einem weichen Kunststoffmaterial, in einer spröden, nicht zwangsentformbaren, vorzugsweise mittels additiver Fertigung hergestellten Form herzustellen, die Sonderkonturbereiche zur Formgebung hinterschnittiger Formteilbereiche aufweist, wobei die Form zur Entformung des Formteils zertrümmert wird. Das Entformen erfolgt ausschließlich durch Zerstörung mindestens eines Teils der Form, es werden keine Losteile (Schieber oder dergleichen) verwendet.

Bei einer Zwangsentformung werden Kunststoffteile aus einem zähen, elastischen Formteilmaterial beim Ausstoßen im elastischen Bereich verformt. Bei dem erfindungsgemäßen Fall sind die hergestellten Formteil zwar elastisch verformbar, können aber dennoch nicht zwangsentformt werden, weil die Form aufgrund der zu formenden hinterschnittigen Bereiche des Formteils eine Geometrie aufweist, die eine Zwangsentformung trotz der Verformbarkeit des Formteils nicht zuläßt.

Die Erfindung beruht unter anderem darauf, daß das sich in der Form befindende elastische Formteil deformierbar ist. Zwar sind für ein Zerbrechen der Form äußere Auslöser ursächlich. Durch eine Deformierbarkeit des Formteils wird jedoch eine Deformation der Form, die in einem Zerbrechen der Form resultiert, überhaupt erst ermöglicht. Das sich in der Form befindende Formteil zerbricht aufgrund seiner elastischen Verformbarkeit weder durch seine Deformation noch durch die Deformation der Form und wird auch nicht anderweitig zerstört oder funktionseinschränkend beschädigt, insbesondere nicht durch eine deformationsbedingte Beaufschlagung mit der zerbrochenen Form.

Da das hergestellte Formteil elastisch verformbar ist, so daß es während der Entformung deformiert werden kann, unterscheidet sich das erfindungsgemäße Verfahren wesentlich von bekannten Verfahren zur Herstellung nicht elastisch verformbarer Formteile, wie sie z.B. für Kerne im Gießereiwesen, insbesondere bei Metallguß, üblich sind und bei denen auch keine Entformung des Formteils mit hinterschnittigen Bereichen aus der Form möglich ist.

Mit der Erfindung wird die Verwendung von Formen zur Herstellung individueller Formteile vorgeschlagen und damit ein Fertigungsverfahren mit der Losgröße 1. Jedes Formteil kann eine individuell definierte Geometrie aufweisen, zumindest aber einen Formteilabschnitt mit einer individualisierten Kontur. Der Form des Formteils sind dabei keine Grenzen gesetzt. Es gibt für das nach dem erfindungsgemäßen Verfahren hergestellte Formteil keine geometrische Einschränkung. Insbesondere können auch stark hinterschnittige Formteile mit dem erfindungsgemäßen Verfahren hergestellt werden, wobei darunter Formteile mit Geometrien verstanden werden, welche eine Entformung des Hinterschnitts aus einer festen formgebenden Kontur nicht ohne die Zerstörung des Formteils ermöglichen würden. Entsprechend zeichnet sich eine Form gemäß einer besonders vorteilhaften Ausführung des Verfahrens dadurch aus, daß die Anzahl Sonderkonturbereiche der formgebenden Kontur der Form in einer Weise zur Formgebung der Anzahl hinterschnittiger Formteilbereiche des Formteils ausgebildet sind, daß die Anzahl auf diese Weise geformter hinterschnittiger Formteilbereiche eine Geometrie aufweisen derart, daß ein Entformen dieser Formteilbereiche aus der Form trotz der elastischen Verformbarkeit des Formteils nicht ohne die Zerstörung des Formteils möglich wäre.

Daß trotz einer Deformation von Formteil und Form ausschließlich die Form oder Teile davon zerstört werden, insbesondere in Scherben (Bruchstücke) zerbrechen, wird erfindungsgemäß dadurch erreicht, daß das Formmaterial eine signifikant geringere Bruchdehnung aufweist als das Formteilmaterial, Anders ausgedrückt, weist das Formteilmaterial eine höhere Bruchdehnung auf als das Formmaterial, aus dem die Form zumindest im Bereich der Sonderkonturbereiche der formgebenden Kontur besteht. Damit ist das Formteil zumindest im Bereich seiner hinterschnittigen Formteilbereiche weniger spröder ist als die Form im Bereich der Sonderkonturbereiche.

Das Verhältnis der Bruchdehnung von Formmaterial zu elastischem Material des Formteils (Formteilmaterial) kann beliebig klein sein. Im Sinne der Erfindung liegt dieses Verhältnis aber mindestens bei 1:3. Mit anderen Worten beträgt die Bruchdehnung des Formteilmaterials mindestens das dreifache der Bruchdehnung des Formmaterials. Bevorzugt beträgt die Bruchdehnung des Formteilmaterials mindestens das zehnfache, besonders bevorzugt mindestens das zwanzigfache der Bruchdehnung des Formmaterials.

Als Formteilmaterial wird vorzugsweise ein (sehr) weiches Material verwendet, aus dem ein nicht-sprödes, elastisches Formteil herstellbar ist. Durch den Einsatz einer mit dem Formteilmaterial zu befüllenden Form können sehr präzise Bauteile aus sehr elastischem Material hergestellt werden. Für das Formteil kann auf diese Weise auch Material verwendet werden, das so weich ist, daß es nicht additiv verarbeitbar ist.

Besonders vorteilhaft ist die Verwendung von Kunststoffen als Formteilmaterial, insbesondere die Verwendung von Elastomeren, Polyurethanschäumen, Silikon und dergleichen. Auch können mehrkomponentige Formteilmaterialien verwendet werden. Gemäß einer Ausführungsform der Erfindung weist das Formteilmaterial eine Shore-Härte A < 90 auf.

Vorzugsweise wird das Formteilmaterial drucklos oder mit einem Druck < 50 bar in die Form eingebracht. Das Ausfüllen der Form mit Formteilmaterial kann hierbei z.B. durch Gießen oder Spritzen erfolgen.

Gemäß einer Ausführungsform der Erfindung werden Einlegeteile verwendet, die vor dem Füllvorgang in die Form eingelegt werden und sich mit dem elastischen Formteilmaterial verbinden und dadurch Teil des Formteils werden. Bei den Einlegeteilen handelt es sich vorzugsweise um Montageelemente oder Verstärkungselemente, wie beispielsweise Gewebe. Auf diese Weise kann die Funktionalität der Formteile erweitert werden. Handelt es sich bei den Einlegeteilen um Montageelemente oder weisen die Einlegeteile Montageelemente auf, können Formteile, die zum Zusammenbau mit anderen Bauteilen vorgesehen sind, anschließend einfacher mit den anderen Bauteilen zu einem fertigen Produkt verbunden werden. Es ist auf diese Weise ebenfalls besonders einfach möglich, die grundlegenden funktionellen Eigenschaften des herzustellenden Formteils gezielt zu beeinflussen.

Gemäß einer Ausführungsform der Erfindung wird eine Anzahl Einlegeteile verwendet, um ein mehrkomponentiges Formteil herzustellen. Vorzugsweise bildet dann ein Einlegeteil zusammen mit der weichen, elastisch verformbaren Komponente des Formteils, die aus dem Formteilmaterial besteht, das Formteil. Die durch das Einlegeteil gebildete Komponente des Formteils besteht dann vorzugsweise aus einem Einlegeteilmaterial, das eine andere Härte, insbesondere eine deutlich größere Härte als das Formteilmaterial aufweist, und dient somit als harte Komponente des Formteils. Auf diese Weise können mit Hilfe geeigneter Einlegeteile beliebige Hart-Weich-Formteile mit abschnittsweise unterschiedlichen Verformbarkeiten gebildet werden.

Gemäß einer Ausführungsform der Erfindung kann es sich bei den Einlegeteilen auch um spezielle Einlegeteile handeln, die nicht in eine bereits vollständig vorhandene Form eingelegt werden, sondern die derart ausgeführt sind, daß sie zusammen mit einem bereits vorhandenen Formgrundköper die Gesamtform bilden. Derartige Einlegeteile dienen mit anderen Worten nicht nur zur Beeinflussung von Eigenschaften des herzustellenden Formteils, da sie nach dem Entformen einen dauerhaften Teil des Formteils bilden, sondern bilden zugleich einen funktionalen Bestandteil der Form. Auch können diese Einlegeteilen selbst mit Formteilmaterial befüllbar sind und auf diese Weise als Form oder Teil der Form dienen.

Da gemäß der Erfindung das Formteil nicht direkt additive gefertigt wird, ist die Auswahl des Formteilmaterials auch nicht durch die Anwendbarkeit für ein additives Fertigungsverfahren begrenzt. Da sich das Formteilmaterial nicht für additive Fertigung eignen muß, kann statt dessen ein für den jeweiligen Anwendungszweck optimal geeignetes, erprobtes Formteilmaterial verwendet werden.

Das für die Herstellung der bei dem erfindungsgemäßen Verfahren genutzten Form, zumindest aber für den Bereich der Sonderkonturbereiche der formgebenden Kontur verwendete Formmaterial eignet sich vorzugsweise zur Herstellung einer zertrümmerbaren, vorzugsweise additiv herstellbaren Form und zeichnet sich darüber hinaus vorzugsweise dadurch aus, daß es derart spröde ist, daß es durch Deformation in Einzelscherben zerbricht. Ein Zerbrechen in einzelne, nicht miteinander verbundene Scherben hat den Vorteil, daß diese Scherben nach dem Entformen des Formteils aus der Form vergleichsweise einfach entfernt werden können.

Die bei der Anwendung des erfindungsgemäßen Verfahrens zum Einsatz kommende Form wird durch den Vorgang des Entformens des Formteils vollständig oder teilweise zerstört, je nachdem, ob die Form einteilig oder mehrteilig ausgebildet ist.

Bei einer einteilig ausgebildeten Form kann die Form nach der zumindest im Umfang der Sonderkonturbereiche stattfindenden Zerstörung der Form nicht noch einmal verwendet werden. Für jedes Formteil wird eine neue Form benötigt. Die Form ist daher eine echte Einmalform (verlorene Form).

Bei einer mehrteiligen Form wird die formgebende Kontur mit den Sonderkonturbereichen vorzugsweise von einer Teilform der Form ausgebildet, die zusammen mit einem oder mehreren weiteren Formbestandteilen die Form bilden. Es wird dann vorzugsweise ausschließlich diejenige Teilform zerstört, welche die mit Sonderkonturbereichen versehene formgebende Kontur aufweist, während eine Zerstörung des der nicht mit Sonderkonturbereichen versehenen Teilformen nicht erforderlich ist. Auf diese Weise kann jeweils ein Teil der Form wiederverwendet werden, während ein anderer Teil der Form als Einmalform dient und individuell gestaltbar ist.

In einer Ausführungsform der Erfindung kann die formgebende Kontur der Form zusätzlich zu den Sonderkonturbereichen auch formgebende Bereiche umfassen, welche zur Formgebung von nicht hinterschnittigen Formteilbereichen ausgebildet sind.

Es hat sich als besonders vorteilhaft erwiesen, wenn die Form dünnwandig ausgeführt wird. Auf diese Weise kann nicht nur die Menge an Formmaterial bei der Herstellung der Form verringert werden. Auch die Zeit zur Herstellung der Form kann sich auf diese Weise verringern, insbesondere bei Anwendung einer additiven Fertigungstechnik. Zugleich unterstützt eine geringe Wandstärke der Form das erfindungsgemäß gewünschte Zerspringen der Form bei einer Deformation. Es ist daher besonders vorteilhaft, die Form zumindest im Bereich der die Sonderkonturbereiche aufweisenden formgebenden Kontur als dünnwandige Schalenkonstruktion auszuführen. Je nach verwendetem Formmaterial kann die Wandstärke der Form beispielsweise 0,5 bis 1,5 mm betragen. Um zu verhindern, daß die Form bereits während der Füllphase, d.h. bei dem Einfüllen des Formmaterials in die Form, insbesondere bei einem erhöhten Fülldruck, zerbricht, kann gemäß einer Ausführungsform der Erfindung die Form zumindest teilweise, jedenfalls aber im Umfang der formgebende Kontur, während des Füllvorgangs von außen mechanisch verstärkt werden. Die Form kann hierzu außenseitig mit einem zusätzlichen, später vorzugsweise leicht zu entfernendem Stützmaterial gestützt werden. Beispielsweise kann die Form während des Füllvorgangs in eine Stabilisierungsmasse eingebracht sein, z.B. in eine Bettung aus Sand. Eine derartige Stützkonstruktion oder Bettung ist besonders bei dünnwandigen Formen von Vorteil. Sie kann die Form zudem nicht nur während des Füllvorgangs, sondern auch während einer etwaigen Aufschäumphase des in die Form eingebrachten Formteilmaterials vor einem Zerbersten schützen.

Gemäß einer Ausführungsform der Erfindung ist es von Vorteil, wenn die Form, zumindest im Bereich der Sonderkonturbereiche der formgebenden Kontur, mit einer Anzahl Sollbruchstellen versehen ist. Auf diese Weise kann nicht nur sichergestellt werden, daß die Form zumindest im Bereich der formgebenden Kontur bei einer Deformation in eine Vielzahl von Scherben zerbricht. Es kann durch die Anordnung und den Verlauf der Sollbruchstellen darüber hinaus auch auf die Größe und die Anordnung der entstehenden Scherben Einfluß genommen werden. So werden die Sollbruchstellen vorteilhafterweise derart ausgeführt, daß die entstehenden Scherben aufgrund ihrer Größe und Position gut aus den hinterschnittigen Bereichen des elastischen Formteils entfernt werden können.

Für eine einfache und unkomplizierte Herstellung der Form, insbesondere bei Anwendung einer additiven Fertigungstechnik, hat es sich als vorteilhaft erwiesen, wenn das die formgebende

Kontur mit den Sonderkonturbereichen verwendete Formmaterial identisch mit dem Formmaterial der übrigen Bereiche der Form ist. Auf diese Weise besteht die gesamte Form oder aber jedenfalls diejenige Teilform der Form, welche die formgebende Kontur mit den Sonderkonturbereiche umfaßt, aus demjenigen Formmaterial, aus dem auch die Sonderkonturbereiche bestehen, und kann in einem Arbeitsgang gefertigt werden.

Gemäß einer bevorzugten Ausführungsform der Erfindung wird ein die formgebende Kontur umfassender Bereich der Form bzw. eine die formgebende Kontur umfassende Teilform einer mehrteiligen Form bzw. die gesamte einteilige Form mit Hilfe eines additiven Fertigungsverfahrens hergestellt, jedenfalls aber zumindest derjenige Sonderkonturbereich, der zur Formung der hinterschnittigen Formteilbereich dient und später zum Zweck der Entformung des Formteils zerstört wird.

Bei dem Formmaterial, das zumindest für den Bereich der Sonderkonturbereiche der formgebenden Kontur verwendet wird, handelt es sich vorzugsweise um einen lichtaushärtenden Kunststoff.

Als bevorzugte additive Fertigungsverfahren werden UV-vernetzende Verfahren eingesetzt, wie z.B. Digital Light Processing (DLP), UV LCD, Stereolithographie (SLA) und dergleichen. Die Anwendung solcher Verfahren für die Herstellung der Form ist unter anderem deshalb von Vorteil, weil damit sehr glatte Oberflächen erzeugt und auch feine Details ausgebildet werden können, beispielsweise Logos und Texte.

Die Form oder Teilform kann zusätzlich zu den Sonderkonturbereichen auch Konturbereiche mit Formkonturen aufweisen, die zur Formgebung von nicht stark hinterschnittigen Bereichen des elastischen Formteils dienen. Diese weiteren Formkonturbereiche können dann auch auf herkömmliche Weise ohne den Einsatz additiver Fertigungsverfahren hergestellt sein.

Auch kann die formgebende Kontur mit den Sonderkonturbereichen, unabhängig von ihrer Fertigungsweise (additiv oder nicht-additiv), mit anderen Teilformen kombiniert und zu einer Gesamtform zusammengefügt werden. Dabei können diese anderen Teilformen auch schon vorab und/oder mit anderen Verfahren, z.B. auch mittels nicht-additiver Fertigung, sowie unter Verwendung anderer Formmaterialien hergestellt worden sein. Diese anderen Teilformen können vorteilhafterweise andere Materialeigenschaften aufweisen, so daß insbesondere auch ein anderes Deformationsverhalten erzielt werden kann. Auf diese Weise ist es einfach möglich, ein Zerbrechen definierter Bereiche der Form gezielt zu erlauben bzw. zu unterbinden.

Eine mehrteilige Form kann gemäß einer Ausführungsform der Erfindung auch dadurch entstehen, daß die Form zumindest teilweise durch spezielle Einlegeteile gebildet wird, die teilweise die Form bilden oder einen Bestandteil der Form bilden, wie oben beschrieben.

Im Anschluß an das Verfestigen des weichen Formteilmaterials in der Form, wodurch das gewünschte Formteil entsteht, findet die Entformung statt. Das Entformen erfolgt durch ein Deformieren der Form und des darin enthaltenen Formteils. Aufgrund dieser Deformation wird die formgebende Kontur der spröden Form, zumindest im Bereich der Sonderkonturbereiche, durch mechanisches Zerbrechen oder Zertrümmern zerstört. Bei einem Übersteigen der Bruchfestigkeit des Formmaterials kommt es dabei vorzugsweise zu Trenn- oder Sprödbrüchen. Das Zerbrechen der Form kann aber auch durch das Auftreten von Verformungs- oder Zähbrüchen erfolgen.

Gemäß der Erfindung erfolgt ein Deformieren der Form. Zusammen mit der Form wird auch das sich noch in der Form befindende Formteil deformiert. Vorteilhafterweise erfolgt das Deformieren der Form durch eine Beaufschlagung der Form mit Druck von außen. Der Druck kann entweder direkt durch mechanische Beaufschlagung oder auch indirekt durch eine pneumatische oder hydraulische Beaufschlagung über ein Medium auf die Außenseite der Form aufgebracht werden. Sofern eine Stützstruktur oder Bettung zur Anwendung kommt, erfolgt das Aufbringen des Drucks vorzugsweise während die Form noch von außen mechanisch verstärkt wird.

Als besonders vorteilhaft für das Zertrümmern der formgebenden Kontur hat sich das Quetschen der Form zusammen mit dem darin enthaltenen Formteil zwischen Walzen oder in einer Mangel erwiesen. Die Vorrichtung zur Durchführung des erfindungsgemäßen Verfahrens umfaßt hierfür geeignete Mittel zur Druckbeaufschlagung (kein Teil der beanspruchten Erfindung).

Durch das Zerkleinern der Form zumindest im Umfang der Sonderkonturbereiche der formgebenden Kontur können alle Scherben (Bruchstücke) der formgebenden Kontur aus den hinterschnittigen Bereichen des Formteils entfernt werden. Dies kann, je nach Geometrie des elastischen Formteils, unmittelbar während des Zerbrechens oder aber in einem Folgeschritt geschehen.

Das Entfernen der Bruchstücke kann vorteilhafterweise durch Rütteln, Schütteln, Drehen oder durch Luft- oder Flüssigkeitsspülen unterstützt werden.

In einer Ausführungsform der Erfindung, in der nicht nur zertrümmerbares, sondern auch lösliches Formmaterial verwendet wird, können die Bruchstücke nach der Zerstörung der Form aufgelöst werden. Es entfällt dann ein unter Umständen aufwendiges Entfernen kleiner und kleinster Bruchstücke. Zu diesem Zweck ist Formmaterial so gewählt, daß es in einem Lösungsmittel auflösbar ist.

Das Entfernen der Bruchstücke erfolgt aus Umweltschutzgründen jedoch vorzugsweise rein mechanisch. Auf diese Weise können die Bruchstücke einfach und günstig entsorgt werden oder können zumindest teilweise wieder zu Formmaterial aufzubereiten werden.

Gemäß einer vorteilhaften Ausführung der Erfindung wird die Form vor dem Befüllen der Form mit einem geeigneten Trennmittel versehen. Auf diese Weise kann ein frühzeitiges Ablösen der Bruchstücke der Form von dem elastischen Formteil erreicht werden. Die Bruchstücke werden dann nicht mehr von dem Formteil gestützt und lassen sich leichter in kleinere Scherben zerbrechen. Als Trennmittel kann, je nach den verwendeten Materialien, beispielsweise ein silikonhaltiges Mittel verwendet werden. Kommt ein Trennmittel zum Einsatz, schließt sich an das Entformen des Formteils bzw. an das Entfernen der Bruchstücke vorzugsweise ein Reinigungsschritt an, bei dem das entstandene elastische Formteil von den Resten des Trennmittels mittels eines geeigneten Lösungsmittels gereinigt wird.

Gemäß einer weiteren vorteilhaften Ausführung der Erfindung ist es vorgesehen, die Form vor dem Befüllen mit dem Formteilmaterial oder alternativ vor dem Entformen in geeigneter Weise zu verspröden. Hierzu kann beispielsweise eine intensive Bestrahlung mit UV-Licht oder die Form kann einer intensiver Trocknung unterzogen werden. Auch kann die Form einer das Formmaterial chemisch versprödenden Atmosphäre ausgesetzt werden.

Mit der Erfindung wird eine Technik bereitgestellt, mit der es möglich ist, aus sehr weichen Materialien auf einfache und vergleichsweise kostengünstige Weise individuelle, elastisch verformbare Formteile, die hinterschnittige Bereiche aufweisen, hochpräzise herzustellen.

Die Erfindung umfaßt das beschriebene Verfahren zur Herstellung eines elastisch verformbaren, eine Anzahl hinterschnittiger Formteilbereiche aufweisenden Formteils mittels einer Form. Die Vorrichtung, die zur Durchführung dieses Verfahrens ausgebildet ist und alle zur Durchführung der beschriebenen Verfahrensschritte ausgebildeten Mittel und Einrichtungen umfaßt, ist kein Teil der beanspruchten Erfindung.

Von der Erfindung umfaßt ist auch das individuelle elastische Formteil, das nach einem derartigen Verfahren hergestellt ist. Zugleich betrifft die Erfindung damit auch die Verwendung eines nach dem erfindungsgemäßen Verfahren hergestellten, elastisch verformbaren Formteils als Teil eines Gegenstands bzw. jeden Gegenstand, der ein durch dieses Verfahren hergestelltes, elastisch verformbares Formteil umfaßt. Ein nach dem erfindungsgemäßen Verfahren hergestelltes Formteil kann vorteilhafterweise zum Zweck der Individualisierung eines Gegenstands verwendet werden, insbesondere in der Orthopädietechnik oder bei der Herstellung von individuellen Produkten zur Performanceverbesserung, z.B. Arbeitsgeräten oder Sportgeräten. Ein solches erfindungsgemäßes Formteil kann insbesondere als Teil eines Schuhs verwendet werden, insbesondere als Schuhsohle bzw. als Teil einer Schuhsohle.

Ebenfalls von der Erfindung umfaßt ist ein Verfahren zum Herstellen einer im Zusammenhang mit dem erfindungsgemäßen Verfahren beschriebenen und mit diesem Verfahren verwendbaren Form oder Teilform mit einer formgebenden Kontur, insbesondere mittels additiver Fertigung, sowie die Verwendung einer solchen Form oder Teilform für das erfindungsgemäße Verfahren. Die Erfindung umfaßt auch ein Material, das zur Verwendung als Formmaterial zu Herstellung der formgebenden Kontur der Form oder Teilform geeignet ist, sowie die Verwendung eines solchen Materials zur Herstellung einer zertrümmerbaren, insbesondere additiv hergestellten, formgebenden Kontur einer Form oder Teilform zur Verwendung in dem erfindungsgemäßen Verfahren.

Ein Ausführungsbeispiel der Erfindung wird nachfolgend anhand der Zeichnungen näher erläutert. Hierbei zeigen:
- Fig. 1: eine schematische Schnittdarstellung einer leeren Form,
- Fig. 2: eine schematische Schnittdarstellung einer mit Formteilmaterial befüllten Form,
- Fig. 3: eine schematische Schnittdarstellung einer teilweise zerbrochenen Form,
- Fig. 4: eine schematische Schnittdarstellung eines Formteils.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

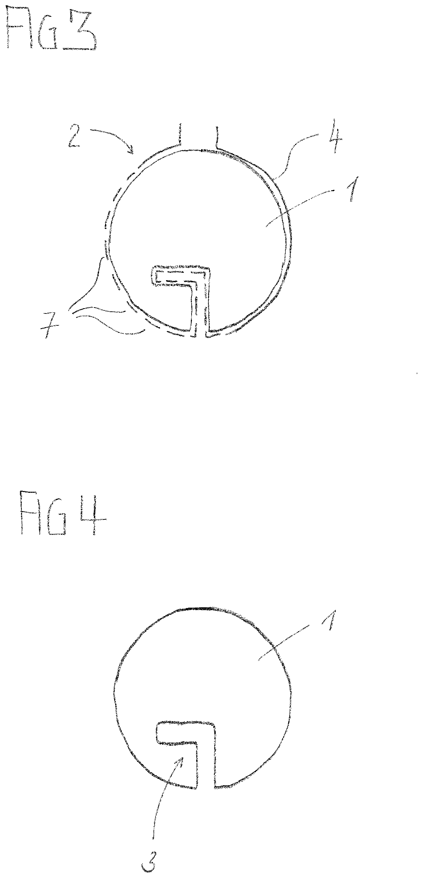

Mit dem beschriebenen Verfahren wird ein elastisch verformbares Formteils 1 mittels einer Form 2 hergestellt. Das fertige Formteil 1 weist eine Anzahl stark hinterschnittiger Formteilbereiche 3 auf, siehe Fig. 4.

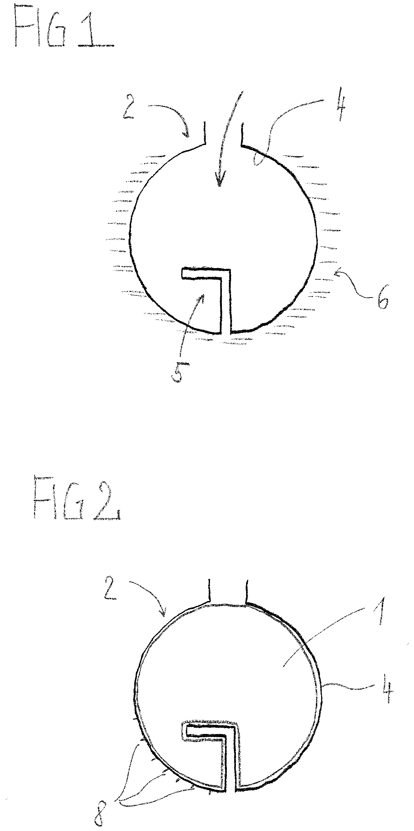

Die Form 2 umfaßt eine feste, d.h**.** nicht elastisch verformbare, formgebende Kontur 4 mit einer Anzahl Sonderkonturbereiche 5, wie in Fig. 1 illustriert. Die Sonderkonturbereiche 5 sind zur Formgebung der Anzahl hinterschnittiger Formteilbereiche 3 des Formteils 1 ausgebildet. Die dünnwandig ausgeführte Form 2 ist, zumindest im Umfang der Sonderkonturbereiche 5**,** aus einem spröden, zertrümmerbaren Material gefertigt. Die Form 2 ist mittels additiver Fertigung hergestellt. Bei dem Formmaterial handelt es sich um einen lichtaushärtenden Kunststoff.

Zunächst wird, wie in Fig. 1 mit dem Pfeil angedeutet, Formteilmaterial in die Form eingebracht. Das Befüllen der Form 2 erfolgt drucklos oder unter geringem Druck. Gleichwohl wird die Form 2 von außen durch eine in Fig. 1 angedeutete Bettung 6 aus Sand mechanisch verstärkt. Bei dem Formteilmaterial handelt es sich um einen vergleichsweise weichen Kunststoff, beispielsweise PU-Schaum. Das Verhältnis der Bruchdehnung von Formmaterial zu Formteilmaterial beträgt mindestens 1:3**.**

Nach dem Verfestigen des weichen Formteilmaterials in der Form 2 erfolgt das Entformen des Formteils 1 aus der Form 2. Zu diesem Zweck wird die Form 2 zusammen mit dem darin enthaltenen Formteil 1 zumindest teilweise deformiert derart, daß sich das Formteil 1 beschädigungslos elastisch verformt und die Form 2 zumindest teilweise, jedenfalls aber im Umfang der Sonderkonturbereiche 5**,** in Scherben (Bruchstücke) 7 zerbricht. Im Bereich der Sonderkonturbereiche 5 ist die formgebende Kontur 4 der Form 2 mit Sollbruchstellen 8 versehen, wie in Fig. 2 angedeutet. Die teilweise zerbrochene Form 2 ist in Fig. 3 abgebildet. Um die gewünschte Deformation zu erreichen, wird die Form 2 und damit auch das in der Form 2 enthaltene Formteil 1 mit Druck beaufschlagt, hervorgerufen durch eine unmittelbare Beaufschlagung der Form 2 durch rotierende Walzen (nicht abgebildet). Das Zerbrechen der Form 2 im Bereich der Sonderkonturbereiche 5 erfolgt ursächlich aufgrund der Deformation der Form 2 während der Druckbeaufschlagung und kann aufgrund der Deformation des elastischen Formteils 1 auch stattfinden.

Abschließend werden die Bruchstücke 7 entfernt, beispielsweise durch einfaches Rütteln, Schütteln und/oder Drehen des Formteils 1. Fig. 4 zeigt das fertige Formteil 1**.**

Alle in der Beschreibung, den nachfolgenden Ansprüchen und der Zeichnung dargestellten Merkmale können sowohl einzeln als auch in beliebiger Kombination miteinander erfindungswesentlich sein.

Diese Merkmale bzw. Merkmalskombinationen können jeweils eine selbständige Erfindung begründen, deren Inanspruchnahme ausdrücklich vorbehalten ist.

Bei der Angabe einer eine Erfindung definierenden Merkmalskombination müssen einzelne Merkmale aus der Beschreibung eines Ausführungsbeispiels nicht zwingend mit einem oder mehreren oder allen anderen in der Beschreibung dieses Ausführungsbeispiels angegebenen Merkmalen kombiniert werden; diesbezüglich ist jede Unterkombination von Merkmalen eines oder mehrerer Ausführungsbeispiele ausdrücklich mit offenbart.

### Bezugszeichenliste

- 1: Formteil
- 2: Form
- 3: hinterschnittiger Formteilbereich
- 4: formgebende Kontur
- 5: Sonderkonturbereich
- 6: Bettung
- 7: Scherben
- 8: Sollbruchstellen

## Patentansprüche

1. Verfahren zur Herstellung eines elastisch verformbaren, eine Anzahl hinterschnittiger Formteilbereiche (3) aufweisenden Formteils (1) mittels einer Form (2),
bei dem Formteilmaterial in die Form (2) eingebracht wird, wobei die Form (2) eine formgebende Kontur (4) mit einer Anzahl Sonderkonturbereiche (5) aufweist, die zur Formgebung der Anzahl hinterschnittiger Formteilbereiche (3) des Formteils (1) ausgebildet sind,
**dadurch gekennzeichnet,**
- **daß** das Formteilmaterial eine höhere Bruchdehnung aufweist als das Formmaterial, aus dem die Form (2) zumindest im Bereich der Sonderkonturbereiche (5) der formgebenden Kontur (4) besteht, und
- **daß** das Formteil (1) aus der Form (2) entformt wird, indem die Form (2) zusammen mit dem darin enthaltenen Formteil (1) zumindest teilweise deformiert wird derart, daß sich das Formteil (1) elastisch verformt und die Form (2) zumindest teilweise, jedenfalls aber im Umfang der Sonderkonturbereiche (5), zerbricht.

2. Verfahren nach Anspruch 1, bei dem die Anzahl Sonderkonturbereiche (5) in einer Weise zur Formgebung der Anzahl hinterschnittiger Formteilbereiche (3) ausgebildet sind, daß die Anzahl auf diese Weise geformter hinterschnittiger Formteilbereiche (3) eine Geometrie aufweisen derart, daß ein Entformen dieser Formteilbereiche (3) aus der Form (2) nicht ohne die Zerstörung des Formteils (1) möglich wäre.

3. Verfahren nach Anspruch 1 oder 2, bei dem die Bruchdehnung des Formteilmaterials mindestens das dreifache, bevorzugt mindestens das zehnfache, besonders bevorzugt mindestens das zwanzigfache der Bruchdehnung des Formmaterials beträgt.

4. Verfahren nach einem der Ansprüche 1 bis 3, bei dem das Formteilmaterial ein Kunststoff ist.

5. Verfahren nach Anspruch 4, bei dem das Formteilmaterial eine Shore-Härte A < 90 aufweist.

6. Verfahren nach Anspruch 4 oder 5 bei dem das Formteilmaterial drucklos oder mit einem Druck < 50 bar in die Form (2) eingebracht wird.

7. Verfahren nach einem der Ansprüche 1 bis 6, bei dem sich das Material, aus dem die Form (2) zumindest im Bereich der Sonderkonturbereiche (5) besteht, dadurch auszeichnet, daß es durch Deformation in Scherben (7), insbesondere in Einzelscherben, zerbricht.

8. Verfahren nach einem der Ansprüche 1 bis 7, bei dem die Form (2) mehrteilig ausgeführt ist und wobei durch das zumindest teilweise Deformieren der Form (2) und des darin enthaltenen Formteils (1) während des Entformens lediglich diejenige Teilform zerbricht, welche die formgebende Kontur (4) mit den Sonderkonturbereichen (5) aufweist.

9. Verfahren nach einem der Ansprüche 1 bis 8, bei dem die Form (2) zumindest im Bereich der Sonderkonturbereiche (5) der formgebende Kontur (4) mit einer Anzahl Sollbruchstellen (8) versehen ist.

10. Verfahren nach einem der Ansprüche 1 bis 9, bei dem die Form (2) zumindest im Bereich der Sonderkonturbereiche (5) der formgebenden Kontur (4) mittels additiver Fertigung hergestellt ist.

11. Verfahren nach Anspruch 10, bei dem das Formmaterial zumindest im Bereich der Sonderkonturbereiche (5) der formgebenden Kontur (4) ein lichtaushärtender Kunststoff ist.

12. Verfahren nach einem der Ansprüche 1 bis 11, bei dem während des Deformierens der Form (2) und des darin enthaltenen Formteils (1) die formgebende Kontur (4) zumindest im Bereich der Sonderkonturbereiche (5) durch mechanisches Zerbrechen zerstört wird.

13. Verfahren nach Anspruch 12, bei dem das Deformieren der Form (2) durch eine Beaufschlagung der Form (2) mit Druck erfolgt.

## Claims

1. Method for producing an elastically deformable molded part (1) having a number of undercut molded part regions (3) by means of a mold (2),
in which molded part material is introduced into the mold (2), the mold (2) having a shaping contour (4) with a number of special contour regions (5) designed to shape the undercut molded part regions (3) of the molded part (1),
**characterized in that**
- the molded part material has a higher elongation at break than the mold material from which the mold (2) is made, at least in the region of the special contour regions (5) of the shaping contour (4), and
- the molded part (1) is demolded from the mold (2) by at least partially deforming the mold (2) together with the molded part (1) contained therein, such that the molded part (1) is elastically deformed and the mold (2) breaks at least in the region of the special contour regions (5).

2. Method according to claim 1, in which the special contour regions (5) are designed to shape the undercut molded part regions (3) such that these undercut molded part regions (3) have a geometry making demolding from the mold (2) impossible without destroying the molded part (1).

3. Method according to claim 1 or 2, in which the elongation at break of the molded part material is at least three times, preferably at least ten times, particularly preferably at least twenty times that of the mold material.

4. Method according to any one of claims 1 to 3, in which the molded part material is a plastic.

5. Method according to claim 4, in which the molded part material has a Shore hardness A < 90.

6. Method according to claim 4 or 5, in which the molded part material is introduced into the mold (2) without pressure or at a pressure < 50 bar.

7. Method according to any one of claims 1 to 6, in which the mold material, at least in the region of the special contour regions (5), is **characterized by** breaking into shards (7), particularly individual shards, through deformation.

8. Method according to any one of claims 1 to 7, in which the mold (2) is designed in multiple parts, and during demolding, only the mold part containing the shaping contour (4) with the special contour regions (5) breaks as a result of the deformation of the mold (2) and the molded part (1).

9. Method according to any one of claims 1 to 8, in which the mold (2) is provided with predetermined breaking points (8) at least in the region of the special contour regions (5) of the shaping contour (4).

10. Method according to any one of claims 1 to 9, in which the mold (2) is produced by additive manufacturing at least in the region of the special contour regions (5) of the shaping contour (4).

11. Method according to claim 10, in which the mold material is a light-curing plastic at least in the region of the special contour regions (5) of the shaping contour (4).

12. Method according to any one of claims 1 to 11, in which the shaping contour (4) is destroyed by mechanical fracturing at least in the region of the special contour regions (5) during deformation of the mold (2) and the molded part (1) contained therein.

13. Method according to claim 12, in which the mold (2) is deformed by applying pressure.

## Revendications

1. Procédé pour la fabrication d'une pièce moulée (1) élastiquement déformable présentant un certain nombre de zones moulées avec dépouille (3) à l'aide d'un moule (2),
dans lequel un matériau pour pièce moulée est introduit dans le moule (2), le moule (2) présentant un contour de formage (4) avec un certain nombre de zones de contour spéciales (5) qui sont conçues pour former les zones moulées avec dépouille (3) de la pièce moulée (1),
**caractérisé en ce que**
- le matériau pour pièce moulée présente un allongement à la rupture supérieur à celui du matériau du moule, au moins dans la région des zones de contour spéciales (5) du contour de formage (4), et
- la pièce moulée (1) est démoulée du moule (2) en déformant au moins partiellement le moule (2) avec la pièce moulée (1) qu'il contient, de sorte que la pièce moulée (1) est élastiquement déformée et que le moule (2) se brise au moins partiellement, mais au moins dans la circonférence des zones de contour spéciales (5).

2. Procédé selon la revendication 1, dans lequel le certain nombre de zones de contour spéciales (5) est conçu de manière à former le certain nombre de zones moulées avec dépouille (3) de telle sorte que les zones moulées avec dépouille (3) ainsi formées présentent une géométrie telle qu'un démoulage de ces zones moulées (3) hors du moule (2) ne serait pas possible sans détruire la pièce moulée (1).

3. Procédé selon la revendication 1 ou 2, dans lequel l'allongement à la rupture du matériau pour pièce moulée est au moins trois fois, de préférence au moins dix fois, et plus particulièrement au moins vingt fois supérieur à l'allongement à la rupture du matériau du moule.

4. Procédé selon l'une des revendications 1 à 3, dans lequel le matériau pour pièce moulée est un plastique.

5. Procédé selon la revendication 4, dans lequel le matériau pour pièce moulée présente une dureté Shore A < 90.

6. Procédé selon la revendication 4 ou 5, dans lequel le matériau pour pièce moulée est introduit dans le moule (2) sans pression ou avec une pression < 50 bars.

7. Procédé selon l'une des revendications 1 à 6, dans lequel le matériau dont est constitué le moule (2), au moins dans la région des zones de contour spéciales (5), se **caractérise par le fait qu'**il se brise en éclats (7), en particulier en éclats individuels, lors d'une déformation.

8. Procédé selon l'une des revendications 1 à 7, dans lequel le moule (2) est réalisé en plusieurs parties et, lors du démoulage, seule la partie du moule contenant le contour de formage (4) avec les zones de contour spéciales (5) se brise suite à la déformation du moule (2) et de la pièce moulée (1).

9. Procédé selon l'une des revendications 1 à 8, dans lequel le moule (2) est pourvu d'un certain nombre de points de rupture prédéterminés (8) au moins dans la région des zones de contour spéciales (5) du contour de formage (4).

10. Procédé selon l'une des revendications 1 à 9, dans lequel le moule (2) est fabriqué au moyen d'une fabrication additive, au moins dans la région des zones de contour spéciales (5) du contour de formage (4).

11. Procédé selon la revendication 10, dans lequel le matériau du moule est un plastique photodurcissable, au moins dans la région des zones de contour spéciales (5) du contour de formage (4).

12. Procédé selon l'une des revendications 1 à 11, dans lequel le contour de formage (4) est détruit par rupture mécanique au moins dans la région des zones de contour spéciales (5) lors de la déformation du moule (2) et de la pièce moulée (1) qu'il contient.

13. Procédé selon la revendication 12, dans lequel le moule (2) est déformé par application de pression.
